# EUROPÄISCHE PATENTSCHRIFT

(11) **EP 3 562 967 B1**
(45) Veröffentlichungstag und Bekanntmachung des Hinweises auf die Patenterteilung: **24.11.2021**
(21) Anmeldenummer: 17849828.3
(22) Anmeldetag: 29.12.2017
(51) Int. Cl.: C22B 7/02, C01B 25/01, B09B 3/00, C02F 11/00

(54) **VERFAHREN UND VORRICHTUNG ZUR AUFARBEITUNG VON STÄUBEN**
METHOD AND DEVICE FOR TREATING DUSTS
PROCÉDÉ ET DISPOSITIF DE TRAITEMENT DE POUSSIÈRES

(30) Priorität: 30.12.2016 AT 5882016
(43) Veröffentlichungstag der Anmeldung: 06.11.2019
(73) Patentinhaber: Radmat AG, 5442 Fislisbach (CH)
(72) Erfinder: EDLINGER, Alfred, A-6781 Bartholomäberg (AT)
(74) Vertreter: Keschmann, Marc
(86) Internationale Anmeldenummer: PCT/IB2017/001607
(87) Internationale Veröffentlichungsnummer: WO 2018/122599

(56) Entgegenhaltungen:
- WO-A1-2016/162138
- WO-A2-2012/065798
- DE-A1- 19 510 874
- LU-A1- 87 961
- PL-B1- 213 915

## Beschreibung

Die Erfindung betrifft ein Verfahren zur Aufarbeitung von Phosphoroxide enthaltenden Stäuben sowie eine Vorrichtung zur Durchführung des Verfahrens.

In der chemischen Industrie, in der Eisen- und Nichteisenmetallerzeugung, im Bergbau, in der Müll- und Klärschlammverbrennung, in der Tierkörperverwertung (Tiermehl), in der Biomasse-Energiegewinnung und dgl. fallen Stäube an, deren Recycling und Deponierung nicht zufriedenstellend gelöst sind. Derartige Stäube haben vorzugsweise eine Korngröße von kleiner 1,5 mm, manchmal auch kleiner 250 µm und können sich aus anorganischen und organischen Verbindungen zusammensetzen. Sie entstehen z.B. auch durch das Trocknen verschiedenster Schlämme und stellen eine hohe Umweltbelastung dar.

Anorganische Bestandteile sind beispielsweise CaO, MgO, SiO₂, Al₂O₃, Cr₂O₃, FeₓO, P₂O₅, TiO₂, SOx, Alkalien, Halogenide, Sulfide, Sulfite, Sulfate, diverse sauerstoffaffine Metallspezies (Nebengruppenelemente, insbesondere Zn). Organische Bestandteile sind beispielsweise Ozokerite, Erdwachse, Fettsäuren, Kohlenwasserstoffe (Aromate, Aliphate), Dioxine, Furane, PCB, Byphenyle, Biozide, Antibiotika, Hormone, Endokrine, Medikamentenrückstände, Prionen und dgl.

Aufgrund von deren Zusammensetzung dürfen z.B. Klärschlämme nicht mehr landwirtschaftlich verwertet werden und sollen bevorzugt einer Monoverbrennung zugeführt werden. Die Verwertung der dabei entstehenden Verbrennungsrückstände ist allerdings bis heute nicht zufriedenstellend gelöst, da diese ebenfalls ein hohes Schadstoffpotential aufweisen. Darüber hinaus bilden die vorhandenen Eisen- und Phosphoroxide unlösliche Verbindungen, welche die Pflanzenverfügbarkeit des Phosphatanteils stark herabsetzen.

Bei der Tierkörperverwertung erhaltenes Tiermehl darf nicht ohne weiteres deponiert oder als Dünger verwendet werden, sondern muss (insbesondere im Falle von Tiermehl der Kategorie 1 gemäß EU-Verordnung (EG) Nr. 1069/2009) verbrannt werden. Die Verbrennung von Tiermehl bereitet jedoch eine Reihe von prozesstechnischen Problemen, wobei darüberhinaus dafür Sorge getragen werden muss, dass im Zuge der Verbrennung eine Mindestverweilzeit bei einer Mindesttemperatur sichergestellt ist, um im Tiermehl enthaltene Gefahrenstoffe, wie z.B. Prionen, zu vernichten.

In der WO 2016/162138 A1 sind ein Verfahren sowie eine Vorrichtung zum Aufarbeiten von metallurgischen Stäuben oder Schleifstäuben beschrieben, bei welchem die Stäube in einer Schmelzkammer mit Sauerstoff unter oxidierenden Bedingungen verschlackt werden. Im Anschluss an die oxidierende Behandlung erfolgt eine partielle Reduktion.

In der WO 03/070651 A1 ist bereits eine Einrichtung zum Schmelzen von Stäuben vorgeschlagen worden, bei welcher die Stäube mit einem Trägergas in eine Brennkammer eingestoßen werden, wobei die Stäube axial und das Trägergas tangential in einen Zyklon eingebracht werden und der Zyklon über eine im Wesentlichen axial gerichtete Austragsöffnung mit einer Brennkammer verbunden ist. Dadurch, dass der Brennkammer ein Zyklon vorgeschaltet ist, welcher als Dosierzyklon wirksam wird, gelingt es, dem Material durch das tangentiale Einblasen von Trägergas eine entsprechend rotierende Bewegung zu verleihen, welche zum Einstoßen der Stäube in die nachfolgende Brennkammer unter einem definierten Drall führt. Dabei kann koaxial zur Zyklonaustragsöffnung Brennstoff sowie ggf. weiteres Trägergas in die Brennkammer eingestoßen werden. Eine derartige koaxiale Zuführung von Brennstoff erlaubt es, die unter einem Drall eingestoßenen Stäube in einem ersten Bereich mit den Brenngasen zu vermischen, worauf mit besonders rascher Temperaturübertragung in der Flamme ein rasches Aufschmelzen der Stäube ermöglicht wird.

Die aus dem Stand der Technik bekannten Einrichtungen führen jedoch zu Problemen in der Staubzuführung, insbesondere in der Brennermündung, da es im Bereich des Übergangs vom kalten Bereich der Staubzuführung zur heißen Brennkammer, d.h. insbesondere im Mündungsbereich des Brenners, zu einer extremen Überhitzung, zu einem Verschmelzen, Verkleben und Sintern sowie zu Anbackungen und einer Agglomeratbildung (sogenannte "Bartbildung") kommt. Dies führt zu häufigen Betriebsunterbrechungen durch Reinigungsmaßnahmen.

Der Tröpfchenaustrag nach der Brennkammer führt auch zu Anbackungsproblemen in der nachgeschalteten Abgasbehandlung mit entsprechenden Wertstoffverlusten (z.B. CaO, P₂O₅ bzw. P₂). Der wärmetechnische Wirkungsgrad ist sehr niedrig, da ein Großteil der Wärme durch das große Abgasvolumen abgeführt und nicht im System genutzt wird.

Weiters hat die Schlackenschmelze eine vergleichsweise geringe Wärmeleitfähigkeit. Dies führt zu großen Problemen im Abstichbereich, sodass es hier oft zu Verstopfungen kommt, was zu großem Aufwand während des Betriebes führt.

Die Aufarbeitung von Klärschlamm bzw. Klärschlammasche bereitet besondere Probleme. Klärschlamm kann neben weitgehend unbedenklichen Naturstoffen auch Umweltgifte, wie beispielsweise Schwermetalle, Halogene, Pestizide, Herbizide, Antibiotika, kanzerogene und mutagene Schadstoffe, chlorierte Kohlenwasserstoffe, polychlorierte Biphenyle, Hormone und Endokrine enthalten. Unter den im Klärschlamm enthaltenen Metallen sind neben den Schwermetallen Kupfer, Zink, Quecksilber und Kadmium auch verschiedene Oxide von Kalzium, Silizium und Aluminium zu nennen, wobei insbesondere das Vorliegen von Eisenoxiden die Gewinnung von reinem Phosphor verunmöglicht, da sich Phosphor mit Eisen zu Phosphoreisen verbindet und somit in Anwesenheit von Eisen nicht rein gewonnen werden kann. Der Gehalt an verschiedenen Metallen und Schwermetallen verhindert zumeist die direkte Verwendung von Klärschlamm als Düngemittel, weshalb Klärschlamm und Klärschlammasche in großen Mengen deponiert werden muss. Die Phosphatverfügbarkeit, gemessen beispielsweise als "Citrat-Löslichkeit", für Pflanzen ist aufgrund des hohen Eisenoxidgehaltes sehr gering. Die Deponierung von Klärschlamm führt dazu, dass die enthaltenen Wertstoffe und insbesondere der nicht nur für die Düngemittelindustrie interessante Phosphor nicht genutzt werden können.

In der WO 2012/065798 A1 ist vorgeschlagen worden, Klärschlamm mit Chloridträgern zu versetzen und anschließend einer oxidativen thermischen Behandlung zu unterziehen. Diese Verfahrensweise führt dazu, dass die enthaltenen Metalle beim Oxidationsschritt in Metallchloride umgewandelt werden, die bei den durch die Chloridzugabe bedingten sehr hohen Temperaturen überaus flüchtig sind und deshalb mit der Gasphase abgezogen werden können. Die verbleibende Fraktion kann in der Folge einer Reduktion unterworfen werden, bei der aus den enthaltenen Phosphoroxiden reiner Phosphor gewonnen werden kann. Eine Aufarbeitung von Stäuben ist in der WO 2012/065798 A1 nicht beschrieben.

Die Erfindung zielt nun darauf ab, ein Verfahren und eine Vorrichtung anzugeben, mit dem bzw. der Phosphoroxide sowie ggf. Chromoxid und ggf. Eisenoxid enthaltene Stäuben zur Gewinnung von Phosphor effizient und wirtschaftlich aufgearbeitet werden können, wobei insbesondere die beschriebenen Probleme des Verklebens, der Entstehung von Anbackungen und einer Agglomeratbildung sowie der sehr hohen Brennkamm-Temperaturen vermieden werden sollen.

Zur Lösung dieser Aufgabe sieht die Erfindung bei einem Verfahren zur Aufarbeitung von Phosphoroxide sowie ggf. Chromoxid und ggf. Eisenoxid enthaltenden Stäuben im Wesentlichen vor, dass die Stäube sowie Primärsauerstoff in eine Mischkammer eingebracht werden, die Stäube durch die Wirkung von Scherkräften desagglomeriert und mit dem Primärsauerstoff vermischt werden, um ein Staub-Sauerstoff-Gemisch zu erhalten, das Staub-Sauerstoff-Gemisch über einen ringförmigen Drosselspalt aus der Mischkammer in eine einen gegenüber der Mischkammer verringerten Druck aufweisende Expansionskammer ausgebracht wird, aus welcher das Staub-Sauerstoff-Gemisch in eine Brennkammer ausgestoßen wird, in welcher das Gemisch unter Zufuhr von Sekundärsauerstoff zu Schmelzetröpfchen aufgeschmolzen wird, wobei die Schmelzetröpfchen agglomeriert und die Schmelze in einem Schmelzebehälter gesammelt wird.

Durch das erfindungsgemäße Verfahren gelingt eine effiziente und wirtschaftliche Aufarbeitung von Stäuben zur Gewinnung von Phosphor, wobei die Desagglomerierung der Stäube zuerst durch das gezielte Einbringen von Scherkräften in der Mischkammer und danach durch die im Drosselspalt wirkenden Scherkräfte erreicht wird. Gleichzeitig erfolgt in der Mischkammer bereits eine Vermischung des Staubs mit Primärsauerstoff. In der Brennkammer werden die brennbaren (organischen) Bestandteile der Stäube bei hohen Temperaturen und einstellbarer Verweilzeit vergast bzw. verbrannt und die nicht brennbaren (anorganischen) Bestandteile geschmolzen und die Schmelzetröpfchen agglomeriert.

Die Phosphoroxide enthaltenden Stäube, die sich für die Aufarbeitung mit Hilfe des erfindungsgemäßen Verfahrens eignen, können aus verschiedensten Quellen stammen, wie z.B. Klärschlamm, Klärschlammasche, Klärschlammschlacke, Gärreste, Rückstände aus der Vergärung von Biomasse, Wirtschaftsdünger, Gülle, Tierfett, Tiermehl, Tiermehlaschen, Fleischknochenmehle, Bioabfälle, Gartenabfälle, Bonderschlämme, phosphathaltige technische Abfalllösungen, phosphathaltige Abwässer, Nebenprodukte der Lebensmittelherstellung, einschließlich Casein, Käsestaub, Fleisch- und Fischabfälle und bei der Herstellung von Speiseöl verbleibende Presskuchen.

Die in den Stäuben enthaltenen Phosphoranteile können in gasförmigem Zustand (als P₂) aus der Brennkammer abgezogen. werden und/oder liegen als Phosphate in der entstehenden Schmelze vor. Gasförmiges Phosphor kann hierbei mit dem Abgas abgezogen und das Abgas gequencht werden, um elementaren Phosphor zu gewinnen. Alternativ kann P₂ zu P₂O₅ verbrannt werden, um das P₂O₅ danach z.B. einer Hydrolyse zu unterwerfen, um Phosphorsäure zu erhalten. Aus dem in der Schmelze enthaltenen Phosphatanteil können mit bekannten Verfahren Phophatverbindungen rückgewonnen werden.

Das erfindungsgemäße Verfahren kann besonders vorteilhaft zur Rückgewinnung von Phosphor aus Tiermehl verwendet werden, wobei das Verfahren gleichzeitig eine sichere Entsorgung des Tiermehls sicherstellt, bei der Prionen und ggf. andere als gesundheits- oder umweltgefährdend eingestufte Stoffe vernichtet werden.

Eine bevorzugte Verfahrensweise sieht daher vor, dass Tiermehl enthaltende Stäube in die Mischkammer eingebracht werden, wobei der Tiermehlanteil der Stäube vorzugsweise > 60 Gew.-% beträgt. Beim Einsatz von Tiermehl ist zu beobachten, dass größere Tiermehlpartikel, die im Staub-Sauerstoff-Gemisch enthalten sind, beim Eintritt in die Brennkammer auf Grund des Temperaturschocks dekrepieren, wobei das enthaltene Kristallwasser und das absorbierte Wasser schlagartig verdampft, wodurch eine ergänzende Zerteilung des Gemisches bzw. der entstehenden Schmelzepartikel erreicht wird.

Durch geeignete Wahl des Mischungsverhältnisses von Staub zu Primärsauerstoff in der Mischkammer kann die in der Brennkammer herrschende Verbrennungsstöchiometrie eingestellt werden, wobei bevorzugt eine reduzierende Atmosphäre eingestellt wird, bei der die organischen Bestandteile des Staubs, insbesondere Tiermehls, vorwiegend zu H₂, CO, CO₂ und N₂ vergast werden. Bevorzugt wird so vorgegangen, dass in der Gasphase der Brennkammer ein CO₂-Anteil von mindestens 15 vol.-% eingestellt wird. Insbesondere ist eine vollständige Oxidation der organischen Bestandteile von Stäuben mit hohem Heizwert, wie z.B. Tiermehl, in der Regel nicht erforderlich, da die Temperatur der Brennkammer andernfalls Werte von 1.600°C überschreiten würde, was zu Feuerfestproblemen führen würde. Der erwähnte CO₂-Anteil kann z.B. durch Zuführen von externem CO₂ erreicht werden oder durch Maßnahmen zur Kühlung des Brennraums, wie z.B. durch das Vorsehen von Kühlflächen eines Wärmetauschers, durch Einblasen von H₂O bzw. Dampf oder durch den Einsatz von Verbrennungsluft mit oder ohne Sauerstoff-Anreicherung. Unter den genannten Redox-Bedingungen verbleibt der Phosphor als Calciumphosphat in der Schlackenschmelze.

Besonders bevorzugt wird Tiermehl oder werden Tiermehl enthaltende Stäube gemeinsam mit einem Silikatträger, wie z.B. Klärschlammasche, in die Mischkammer eingebracht. Mit der Klärschlammasche wird ein weiterer Phosphatträger zugegeben, wobei gleichzeitig der Silikat- bzw. SiO₂-Anteil der Klärschlammasche genutzt wird, um die hohe Basizität des Tiermehls abzusenken. Dies ist im Hinblick auf die Einstellung einer geeigneten Schmelzviskosität von bevorzugt 0,3-1,8 Pa*sec von Vorteil. Weiters wird dadurch die Verflüchtigung von P₂O₅ aus der Schmelze reduziert, was erwünscht ist, wenn man die Rückgewinnung von Phosphat aus der Schmelze anstrebt.

Bevorzugt enthalten die Stäube Tiermehl in einem Anteil von 80 bis 96 Gew.-% und Klärschlammasche in einem Anteil von 4 bis 20 Gew.-%.

Das erfindungsgemäße Verfahren kann auch vorteilhaft für die Aufarbeitung von eisenoxidhaltigen Stäuben verwendet werden. Eine bevorzugte Verfahrensweise sieht in diesem Zusammenhang vor, dass die Stäube Eisenoxid enthalten und dass das Staub-Sauerstoff-Gemisch in der Brennkammer unter ergänzender Anwesenheit von elementarem Chlor und ggf. Chloridträgern zu Schmelzetröpfchen aufgeschmolzen wird, wobei die entstehenden Eisenchloride gasförmig abgezogen und die von Eisenoxiden und ggf. Chromoxiden weitestgehend befreiten Schmelzetröpfchen agglomeriert werden.
Bevorzugt kann das Staub-Sauerstoff-Gemisch hierbei durch den Impuls eines Brennstoff-, insbesondere Brenngasstrahles gemeinsam mit diesem in die Brennkammer ausgestoßen werden.

Bevorzugt handelt es sich bei den aufzuarbeitenden Stäuben um pyrolysierten, pulverisierten Klärschlamm oder um aus der Verbrennung von Klärschlamm stammende Klärschlammasche. Klärschlammasche ist besonders bevorzugt, weil diese einen hohen Gehalt von bis zu 25 Gew.-% Phosphoroxiden aufweist.

Die Verschlackung von Klärschlamm bzw. von deren Asche gemeinsam mit elementarem Chlor bzw. Chloridträgern, wie z.B. Cl₂, CaCl₂, HCl, KCl, NaCl, führt zu einer Verflüchtigung von Fe in der Chloridform:

FeO + CaCl₂ -> FeCl₂ + CaO,

bzw.

FeO + 2 KCl -> FeCl₂ + K₂O

FeO + 2HCl -> FeCl₂ + H₂O

Im Falle der Zugabe von Chlorgas (Cl₂) wird der Sauerstoff im FeO durch das Chlorgas oxidiert, wobei FeCl₂/FeCl₃ sowie freier, oxidierter Sauerstoff (O₂) entsteht, und das Chlor wird dabei zu Chlorid-Anionen reduziert:

FeO + Cl₂ -> FeCl₂ + O2, bzw. O2⁻ + 2Cl -> 2C1⁻ + O ("Reaktion I")

Diese als "Oxychlorierung" bezeichnete Reaktion bedeutet somit, dass O2⁻ mittels Cl₂ "oxidiert" wird und das elementare Chlor zu Chlorid-Anionen (Cl⁻) reduziert wird.

Dabei soll eine Metallisierung der Eisenoxide verhindert werden, da diese der Chloridisierungsreaktion andernfalls nicht mehr zugänglich wären. Um eine Metallisierung von FeO zu verhindern, wird so vorgegangen, dass in der Brennkammer in Bezug auf das Oxidationsmittel Chlor eine oxidierende Atmosphäre eingehalten wird. Die Gewährleistung einer oxidierenden Atmosphäre bedeutet insbesondere, dass neben dem CO₂ aus der Verbrennung noch freier Sauerstoff (O₂) im Verbrennungsgas vorliegt. Die Oxychlorierung läuft aber auch in Abwesenheit von freiem O₂ bei einem CO-Partialdruck von bis zu 30 vol.-% (Rest CO₂) noch sehr rasch ab. Offenbar wird der oxidierte Sauerstoff der Reaktion I durch das CO rasch zu CO₂. abgebaut, was sich auf das obige Reaktionsgleichgewicht positiv auswirkt.

Hinsichtlich des Verhältnisses der FeCl₃- und FeCl₂-Bildung wurde festgestellt, dass die Wertigkeitsstufe von Fe abhängig vom O₂-Partialdruck (neben dem Chlor-Partialdruck) und der Temperatur in der Brennkammer ist. Bei hohem O₂-Partialdruck bildet sich überwiegend FeCl₃, welches einen Siedepunkt von 319°C aufweist. Im eher reduzierenden Bereich (kein O₂, sondern nur CO₂/CO in der Brennkammer) bildet sich überwiegend FeCl₂, welches einen Siedepunkt von 1.026°C aufweist, wobei in der Brennkammer wie erwähnt ein CO-Partialdruck von höchstens 30 vol.-% vorliegen sollte. Bei einem höheren CO-Partialdruck bilden sich unerwünschte Verbindungen. Bei einem CO-Partialdruck von ca. 40 vol.-% beginnen sich diverse unerwünschte Chlor-Eisen-Oxidphasen mit unterstöchiometrischem Wüstit-Anteil zu bilden, welche einer Chlorierung nicht mehr bzw. nur schwer zugänglich sind. Bei einem CO-Partialdruck von ca. 60 vol.-% beginnt sich metallisches Eisen und elementarer Phosphor und in der Folge das unerwünschte Fe₃P (Eisenphosphor) zu bilden.

Es wurde festgestellt, dass ein höherer Sauerstoffpartialdruck bei Anwesenheit von freiem Sauerstoff dazu führt, dass vorwiegend FeCl₃ an Stelle von FeCl₂ gebildet wird. Wenn kein freier Sauerstoff, sondern hauptsächlich CO₂ vorliegt, entsteht mehr FeCl₂, welches weniger flüchtig ist als FeCl₃.

Um FeCl₂/FeCl₃ zu erhalten, d.h. für die Oxychlorierung, ist es notwendig, dass der Brennstoff wasserfrei ist. Bevorzugt wird als Brenngas wasserfreies CO eingesetzt. Alternativ kann als Brennstoff auch Kohlestaub eingesetzt werden.

Die erfindungsgemäß in die Mischkammer eingebrachten Stäube haben eine Partikelgrößenverteilung, die durch einen Wert d₉₀ von < 1,5mm, insbesondere < 250um gekennzeichnet ist.

Die Stäube können als Kalt- oder/und als Heißstäube in die Mischkammer eingebracht werden.

Zur Durchführung des erfindungsgemäßen Verfahrens sieht die Erfindung eine Vorrichtung vor, umfassend eine Mischkammer mit einer Aufgabeöffnung für die Aufgabe von Stäuben und mit einer Austragsöffnung, wobei in der Mischkammer von einem Rotationsantrieb rotierend antreibbare stangenförmige Mischelemente angeordnet sind, in die Mischkammer mündende Düsen zum Einbringen von Primärsauerstoff vorgesehen sind und die Austragsöffnung von einem ringförmigen Drosselspalt gebildet ist, weiters umfassend eine Expansionskammer, welche an den Drosselspalt anschließend angeordnet ist, und eine Brennkammer, welche an die Expansionskammer anschließend angeordnet ist, wobei in die Brennkammer Düsen für die Zufuhr von Sekundärsauerstoff münden, und weiters umfassend einen an eine Austragsöffnung der Brennkammer anschließenden Schmelzebehälter zum Sammeln der in der Brennkammer entstehenden Schmelzetröpfchen sowie einen Abzug zum Abziehen der Abgase.

Bevorzugt ist eine koaxial zum ringförmigen Drosselspalt angeordnete, in die Expansionskammer oder stromabwärts der Expansionskammer mündende Brennerlanze zum Einbringen eines Brennstoffstrahles vorgesehen, sodass ein Staub-Sauerstoff-Gemisch durch den Impuls des Brennstoffstrahles gemeinsam mit diesem aus der Expansionskammer in die Brennkammer ausgestoßen werden kann.

Im Rahmen des erfindungsgemäßen Verfahrens und der erfindungsgemäßen Vorrichtung kommen als wesentliche Komponenten somit die Mischkammer, die Expansionskammer und die Brennkammer zum Einsatz.

Die Mischkammer dient dazu, die eingetragenen Stäube zu desagglomerieren und mit dem Primärsauerstoff zu vermischen. Zu diesem Zweck werden in der Mischkammer Scherkräfte erzeugt, wobei dies bevorzugt durch rotierende, insbesondere stangenförmige Mischelemente erfolgt. Insbesondere ist vorgesehen, dass in Strömungsrichtung der Stäube abwechselnd rotierende Mischelemente und statische Mischelemente angeordnet sind. Die statischen Mischelemente wirken hierbei als statische Strombrecher und die rotierenden Mischelemente wirken im Sinne einer Verwirbelung der Stäube bzw. des Staub-Sauerstoffgemisches. Die statischen Mischelemente werden bevorzugt von Stäben gebildet, die am zylindrischen Gehäuse der Mischkammer angebracht sind und von diesem radial in das Innere der Mischkammer ragen. Die rotierenden Mischelemente werden bevorzugt ebenfalls von Stangen gebildet, die an einem um die Zylinderachse des Gehäuses rotierbar gelagerten Rotor befestigt sind und von diesem radial nach außen ragen. Die Drehzahl des Rotors beträgt vorzugsweise 30-200 min⁻¹. Die statischen und die rotierenden Mischelemente überlappen einander in Achsrichtung gesehen, sodass zwischen den statischen und den rotierenden Mischelementen eine Scherwirkung erzeugt wird und gleichzeitig eine Verwirbelung stattfindet.

Die Verwirbelung wird dadurch noch weiter begünstigt, dass, wie dies einer bevorzugten Ausführungsform entspricht, die Düsen für das Einbringen des Primärsauerstoffs an den statischen Mischelementen angeordnet sind. Der Austrittswinkel der Düsen kann dabei so eingestellt werden, dass es zu einer optimalen Verwirbelung des eingetragenen staubförmigen Materiales kommt.

Bevorzugt herrscht ein Druckgradient zwischen der Staubaufgabe und der Brennkammer, welcher eine Strömung des Staub-Sauerstoff-Gemisches in Richtung zur Brennkammer bewirkt. Für einen über den Querschnitt gleichmäßig verteilten Staubeintrag in die Brennkammer ist der erfindungsgemäß vorgesehene ringförmige Drosselspalt an der Austragsöffnung der Mischkammer von Bedeutung. Durch die Drosselwirkung des Drosselspalts wird eine überaus gleichmäßige Staubverteilung über den Umfang des Drosselspalts erreicht. Allfällig mitgerissenes Staubagglomerat wird über die Scherwirkung in diesem Drosselbereich desintegriert.

In der an die Austragsöffnung der Mischkammer unmittelbar anschließenden Expansionskammer wird eine Saugwirkung erzeugt, welche sich zumindest teilweise auf Grund des Brennstoffstrahls ergibt, der in diesem Bereich ggf. eingebracht wird, um das Staub-Sauerstoff-Gemisch in die Brennkammer einzustoßen. Die Injektorwirkung des Brennstoffstrahls führt zu einer optimalen Vormischung des noch kalten Sauerstoff-Brennstoff-Staubgemisches. Es ergibt sich in der Brennkammer eine dichte kalte Staubwolke vor der Brennermündung, wodurch die intensive Wärmestrahlung aus der Brennkammer auf das Brennersystem stark vermindert wird. Die dichte Flugstaubwolke zündet aufgrund von deren hoher Eintrittsströmungsgeschwindigkeit erst in einigem Abstand entfernt von der Brennermündung in der Brennkammer. Die Zündgeschwindigkeit der Flugstaubwolke beträgt beispielsweise 0,4 m/sec, wobei die Zündgeschwindigkeit im Vergleich zur reinen Flammenausbreitungsgeschwindigkeit geringer ist, da die dichte Staubwolke diese stark verzögert. Erst nach Unterschreiten einer kritischen Staubdichte, in Abhängigkeit von deren Strömungsgeschwindigkeit, zündet das Gemisch in der heißen Brennkammer sehr gleichmäßig. Der beschriebene thermische Schutz der Brennermündung verhindert Anbackungen bzw. Versinterungen des zugeführten Staubes durch die in die Brennkammer vorgelagerte Flugstaubwolke.

Alternativ kann anstatt des Brennstoffstrahles Inertgas, Luft (z.B. vorgewärmt) oder ein CO₂/Wasserdampfgemisch mit dem Staub-Sauerstoff-Gemisch in die Brennkammer ausgestoßen werden.

Insbesondere im Falle der Aufarbeitung von Tiermehl ist das Einbringen eines zusätzlichen Brennstoffs in die Brennkammer nicht erforderlich, weil Tiermehl ohnehin einen hohen Heizwert von ca. 10-25 MJ/kg aufweist.

In der Brennkammer gelingt eine weitere Verwirbelung durch die Zufuhr von Sekundärsauerstoff. Die Zufuhr von Sekundärsauerstoff kann hierbei bevorzugt über eine koaxial zum Brennstoffstrahl angeordnete, ringförmige Düse erfolgen. Der Sekundärsauerstoffstrahl ummantelt hierbei das in die Brennkammer ausgestoßene Staub-Sauerstoff-Brennstoff-Gemisch und führt zu einer gleichmäßigen Beaufschlagung des Brennkammervolumes, wo es zu einer raschen, gleichmäßigen Verbrennung, Durchwärmung und Tröpfchenbildung des Eintragsgutes aufgrund von dessen großer spezifischen Oberfläche kommt. Die Erwärmung, das Schmelzen und die thermochemischen Reaktionen erfolgen hier abhängig im Wesentlichen von der Korngröße und der Korngrößenverteilung des Staubes bevorzugt innerhalb 0,2 bis 1,5 sec, wobei Brennkammergastemperaturen von bis zu 1800°C zu beobachten sind. Die Strömungsgeschwindigkeit in der Brennkammer kann vorzugsweise 0,2 - 4,5 m/sec, insbesondere 0,2 - 2,0 m/sec, betragen.

Bevorzugt kann eine Verdrallung der Sekundärsauerstoff-Strömungsstrahlen um die Brennkammerachse vorgenommen werden, was zu einer optimalen Wirbelströmung und damit zu einer weiteren Erhöhung der Reaktionsgeschwindigkeit und zu einer Vergleichmäßigung des Reaktionsfortschrittes bzw. der Reaktionsfront in der Brennkammer führt.

Das Vormischen eines kalten Gas-Staub-Gemisches noch im Brennerkopfbereich, wie vorhin beschrieben, und der Sekundärsauerstoffeintrag sorgen für ein von der Brennermündung entferntes Zünden des Gemisches und verhindern so das unerwünschte und gefährliche Anbacken/Ansintern des Staubes im Brennerkopfbereich.

Durch Einstellung der Verbrennungsstöchiometrie, definiert als das Verhältnis der Summe von Brennstoff und Organikafraktion im Staub zu Sauerstoff, kann im Fall der Aufarbeitung von eisenoxidhaltigen Stäuben eine oxidierende Atmosphäre (Lambda >1) in der Brennkammer erzeugt werden, sodass das Staub-Sauerstoff-Brennstoff-Gemisch in der Brennkammer unter Anwesenheit von elementarem Chlor (Cl₂) und ggf. Chloridträgern in oxidierender Atmosphäre zu Schmelzetröpfchen aufgeschmolzen werden kann. Die dabei entstehenden Eisenchloride werden mit dem Abgas abgezogen. Um den von Eisenoxiden und ggf. Chromoxiden weitestgehend befreiten Tröpfchenstrom zu agglomerieren, wird dieser in einen Schmelzebehälter geleitet, in dem die Schmelze gesammelt wird. Bevorzugt wird hierbei so vorgegangen, dass das Brennstoff/Tröpfchen-Gemisch von der Brennkammer durch eine hochturbulente agglomerierende Heißgasventuridüse in den Bereich des Schmelzebehälters geführt wird. Dessen Austrittsmündung ist auf die im Schmelzebehälter befindliche Schmelze gerichtet, wobei aufgrund des Auftreffimpulses und der Oberflächenspannung der Schmelze eine weitgehende Tröpfchenabscheidung aus der Gasphase erfolgt.

Die entstehende Schmelze hat im Gegensatz zu Metallschmelzen nur eine sehr geringe Wärmeleitfähigkeit. Bevorzugt wird der Schmelze eine Sn/Cu/Ni-Legierungsschmelze unterlegt. Diese leitet die Wärme sehr gut, schützt den Feuerfestaufbau des Schmelzebehälters und sammelt aus der Schmelze sedimentierte Metalle. Die Legierungsschmelze ist bevorzugt so zusammengesetzt, dass diese zwischen 1.050°C und 1.250°C eine dünnflüssige Schmelze bildet. Beheizt werden kann diese Schmelze beispielsweise induktiv im Niederfrequenzbereich, wobei über die Lorentzkraft auch turbulent gerührt werden kann.

Die im Schmelzebehälter gesammelte, im Wesentlichen eisenfreie mineralische Schmelze ist weitestgehend schadstofffrei und kann auf vielfältige Weise verwendet werden.

Bevorzugt kann die Schmelze einer Reduktion zur Gewinnung von elementarem Phosphor unterzogen werden. Insbesondere kann eine carbothermische Schlackenreduktion vorgenommen werden, bei welcher hochreiner elementarer Phosphor ("weißer Phosphor", P₂) mit sehr hoher Ausbeute gewonnen werden kann, da kein Phosphoreisen als unerwünschtes Nebenprodukt entstehen kann. Die carbothermische Reduktion kann hierbei bevorzugt unter Verwendung einer zumindest teilweise induktiv beheizten Säule mit stückigem Koks und/oder Graphit durchgeführt werden, wobei der entweichende elementare Phosphor abgezogen wird. Die Reduktion auf einer zumindest teilweise induktiv beheizten Säule ist beispielsweise aus der WO 2006/079132 A1 bekannt, wobei diesem Dokument auch eine entsprechende Vorrichtung zur Durchführung eines Reduktionsschritts entnommen werden kann. Mit einer zumindest teilweise induktiv erhitzten Kokssäule lassen sich überaus hohe Temperaturen erzielen, wobei eine reduzierende Atmosphäre eingestellt werden kann, da der Kohlenstoff der Säule nicht mit Verbrennungsprodukten und insbesondere nicht mit CO₂ im thermischen Gleichgewicht steht.

Für die Reduktion der Schmelze zur Gewinnung von elementarem Phosphor (P₂) ist es vorteilhaft, wenn die Schmelze ein CaO/SiO₂-Verhältnis von 0,4-1,4 aufweist. Dies kann durch Zugabe von Kalkträger, wie z.B. CaCO₃ und/oder CaO, oder von CaCl₂ zur Schmelze oder zu den aufzuarbeitenden Stäuben erfolgen. Besonders vorteilhaft wird die Einstellung des CaO/SiO₂-Verhältnisses durch Zugabe einer Staubfraktion erreicht, die bei der mechanischen Aufbereitung von Stahlschlacke anfällt. Bei der Stahlherstellung z.B. mit dem LD-Verfahren oder dem Elektrolichtbogenofen, fallen Schlacken mit einem hohen CaO-Gehalt an. Diese werden in der Regel zur Rückgewinnung von metallischem Eisen mechanisch aufbereitet, wobei eine hochproblematische Staubfraktion übrigbleibt. Diese Staubfraktion kann den aufzuarbeitenden Stäuben als Additiv zur Einstellung der erforderlichen Basizität (CaO/SiO₂) zugesetzt werden. Da die genannte Staubfraktion auch Phosphor und Chrom enthält, gelingt dadurch nicht nur eine Verwertung der sonst problematisch zu deponierenden Stäube, sondern auch eine Rückgewinnung des enthaltenen Phosphors durch die erfindungsgemäß bevorzugte Oxychlorierung. Wie beobachtet werden konnte, kann unter den beschriebenen Chlorierungsbedingungen auch der Chromgehalt der genannten, aus der Aufarbeitung der Stahlwerksschlacken stammenden Staubfraktion günstig entfernt werden, wobei der Chromgehalt in die Gasphase verfrachtet wird, nämlich durch Verflüchtigung in Form von Chromoxidchlorid (CrO₂Cl₂) und Chromchlorid (CrCl₂, CrCl₃, CrCl₄), und eine eisen- und chromfreie Schmelze erhalten wird. Die beschriebene Verwertung der Staubfraktion ist besonders interessant für die Stahlherstellung aus hochphosphathältigen Eisenerzen, z.B. sog. "Minette-Erze", welche auf Grund des hohen P-Anteils heute nicht mehr verhüttet werden. Derartige Stahlschlacken weisen P₂O₅-Werte von bis zu 20 Gew.-% auf. Die früher als "Thomasmehl" bzw. Phosphor-Dünger mögliche Verwertung der Schlacke ist heute auf Grund des hohen Chromgehaltes der Schlacke nicht zulässig.

Alternativ ist es für die Reduktion einer aus der Aufarbeitung von Tiermehl und Klärschlamm/Klärschlammasche enthaltenen Schmelze zur Gewinnung von elementarem Phosphor (P₂) vorteilhaft, wenn die Schmelze ein CaO/SiO₂-Verhältnis von 0,9-1,4 aufweist.

Alternativ kann die im Wesentlichen eisenfreie Schmelze auch zur Herstellung eines Düngemittels verwendet werden. Die Wasserdampfgranulation der Schmelze führt zu einem hochporösen Granulat, welches aufgrund der Eisenfreiheit eine optimale Pflanzenverfügbarkeit aufweist. Die Phosphat-Pflanzenverfügbarkeit ist beispielsweise wesentlich größer als beim bekannten "Thomasmehl", wie sich unter anderem im Zitronensäure-Test gezeigt hat. Die Schmelze besitzt eine niedrigere Basizität, weist dafür aber einen erhöhten SiO₂-Gehalt auf, was sich ebenfalls sehr positiv auf das Pflanzenwachstum auswirkt. Darüber hinaus ist auch die absolute Chromatfreiheit derartiger alternativer Dünger erwähnenswert.

Alternativ kann aus der Schmelze schadstoff-freie Phosphorsäure hergestellt werden. Durch Ansäuern der Schmelze mit Schwefelsäure wird hochreine Phosphorsäure gewonnen. Die Calciumverbindungen fallen als praktisch unlöslicher Gips an, die Kieselsäure fällt kolloidal aus.

Alternativ können durch Granulieren der Schmelze in Schwefelsäure Superphosphate hergestellt werden.

Die Granulation der Schmelze in siedender, verdünnter Schwefelsäure führt zur Bildung von Superphosphat (neben aliquotem Anteil von Gips). Außerdem liegt das entsprechende Granulat hochporös vor, was aufgrund der sehr großen Oberfläche zu einer entsprechend erhöhten Lösungskinetik und damit auch hohen Pflanzenverfügbarkeit führt. Auch der entstandene Gips wirkt sich positiv auf die Düngewirkung aus. Die Menge des entstehenden Superphosphates und Gips hängt vom P₂O₅-Gehalt und der zugegebenen Säuremenge ab:

Ca₃(PO₄)₂ + 2 H₂SO₄ + 4 H₂O → Ca(H₂PO₄)₂ + 2CaSO₄.H₂0

Bei Zugabe von H₂SO₄ zu der Ca₃(PO₄)₂ enthaltenden Schmelze entsteht somit gut pflanzenverfügbares Calciumhydrogenphosphat Ca(H₂PO₄)₂ und Gips (CaSO₄) sowie kolloidale Kieselsäure (SiO₂).

Derartige im vorgenannten Prozess hochrein anfallende Verbindungen finden auch in der Nahrungsmittelherstellung (E341) und in der pharmazeutischen Industrie Verwendung.

Wird die Menge der zugesetzten Schwefelsäure erhöht, so entsteht Calciumdihydrogenphosphat.

Wird die Menge der zugesetzten Schwefelsäure noch weiter erhöht, entstehen freie Phosphorsäure (H₃PO₄) und Gips.

Im Zusammenhang mit der Aufarbeitung von eisenoxidhaltigen Stäuben, bei der das Staub-Primärsauerstoff-Gemisch unter Anwesenheit von elementarem Chlor und ggf. Chloridträgern zu Schmelzetröpfchen aufgeschmolzen wird, ist es prinzipiell möglich, dass die Chloridträger bereits in den zu verarbeitenden Stäuben enthalten sind, oder dass das elementare Chlor und ggf. die Chloridträger während des erfindungsgemäßen Verfahrens zugegeben wird. Im ersten Fall kann das Chlorid bevorzugt als HCl mit den Stäuben in die Mischkammer eingebracht werden. Beispielsweise kann eine zu verarbeitende Klärschlammasche mit HCl vorbehandelt werden. Dies erspart die Zugabe von CaCl₂ während des erfindungsgemäßen Verfahrens. Die Vorbehandlung kann beispielsweise durch Behandlung von Klärschlammasche mit gasförmiger HCl in einer Wirbelschicht erfolgen. Die Klärschlammasche kann auch mit wässriger Salzsäure zu einer Suspension verarbeitet werden; nachteilig hierbei ist jedoch, dass das Produkt vor der Weiterverarbeitung getrocknet werden muss.

Im zweiten Fall kann die Zugabe von elementarem Chlor und ggf. Chloridträgern in verschiedenen Phasen des Verfahrens erfolgen. Bevorzugt kann das Chlorid als gasförmiges HCl gesondert von den Stäuben in die Mischkammer eingebracht werden. Es ist aber auch möglich, dass Cl₂-Gas in die Mischkammer und/oder in die Brennkammer eingebracht wird. Die Zugabe von elementarem Chlorgas führt zu einer sehr raschen Reaktion zu FeCl₂/FeCl₃ und damit zur beabsichtigten Eisenverflüchtigung. Die Zugabe von Cl₂-Gas erfolgt bevorzugt über die koaxial zum Brennstoffstrahl angeordnete, ringförmige Düse, d.h. mit dem Sekundärsauerstoff.

Alternativ kann als Chloridträger CaCl₂ in die Mischkammer und/oder in die Brennkammern eingebracht werden.

In Bezug auf die Druckverhältnisse in der Mischkammer, der Expansionskammer und der Brennkammer ist bevorzugt vorgesehen, dass die Brennkammer unter einem unter dem Druck der Mischkammer liegenden Druck gehalten wird. Weiters ist es bevorzugt wenn in der Brennkammer ein unterhalb der Expansionskammer liegendes Druckniveau herrscht. Es besteht somit ein abfallender Druckgradient von der Mischkammer über die Expansionskammer bis zur Brennkammer, der einerseits den Transport des Einsatzgutes in die gewünschte Richtung und andererseits die gewünschte Vermischung des Sauerstoff-Brennstoff-Staubgemisches und die Beabstandung der Flamme von der Brennermündung bewirkt. Der Druckgradient kann bevorzugt durch Anordnung eines Saugzuggebläses im Abzug erreicht werden.

Die in der Expansionskammer erfolgende Expansion des Staub-Primärsauerstoff-Gemisches wird durch den ringförmigen Drosselspalt begünstigt, über den das Staub-Primärsauerstoff-Gemisch aus der Mischkammer in die Expansionskammer ausgebracht wird. Vorzugsweise umgibt der Drosselspalt hierbei die Austragsöffnung der Mischkammer ringförmig. Um im Drosselspalt eine zusätzlich Scherwirkung zu erzeugen, ist in bevorzugter Weise vorgesehen, dass der Drosselspalt von zwei Ringflächen begrenzt wird, die eine Relativdrehgeschwindigkeit zueinander aufweisen. Durch den Geschwindigkeitsgradienten zwischen einer an einem Drehring ausgebildeten Ringfläche und einer an einem starren Ring ausgebildeten Ringfläche wird ggf. aus der Mischkammer mitgerissenes Staubagglomerat wirkungsvoll desintegriert. Das Eisenchloride enthaltende Abgas der Brennkammer kann in verschiedener Weise genutzt werden. Gemäß einer bevorzugten Verfahrensweise wird das die Eisenchloride enthaltende Abgas der Brennkammer unter Zugabe von Wasser gekühlt und einer Pyrohydrolyse unterworfen, wobei die Eisenchloride zu Magnetit (Fe₃O₄) und/oder Hämatit (Fe₂O₃) und HCl umgesetzt werden.

Bei indirekter, wasserfreier Kühlung erhält man FeCl₂ und FeCl₃, welches beispielsweise in der Wasseraufbereitung als Phosphat-Fällungsmittel eingesetzt werden kann.

Eine alternative Nutzung des Abgases sieht vor, dass das die Eisenchloride und ggf. Schmelzetröpfchen enthaltende Abgas unter Zugabe von Eisenoxid und Phosphoroxide sowie ggf. Chromoxid enthaltenden Stäuben (als Kaltgut) gekühlt wird und die so vorgewärmten Stäube ggf. gemeinsam mit den erstarrten Schmelzetröpfchen in die Mischkammer eingebracht werden. Dadurch gelingt eine Sekundärstaub-Rückführung in das Brennersystem. Um die Rückführung zu ermöglichen, weist der Abzug bevorzugt eine Trenneinrichtung zum Abtrennen von festen Partikeln aus dem Abgasstrom auf.

Bevorzugt erfolgt die Zugabe von Eisenoxid und Phosphoroxide sowie ggf. Chromoxid enthaltenden Stäuben in das Abgas auch unter Zusatz von karbonatischen, hydroxidischen, oxidischen und/oder wasserhältigen Additiven. Dabei frieren die allfällig mitgerissenen Schlacketröpfchen bevorzugt am Kaltgut an. Insbesondere carbonatische Zusatzstoffe (z.B. Kalkstein) werden unter stark endothermen Bedingungen kalziniert ("entsäuert"), was zu der gewünschten starken Temperaturabsenkung führt. Das Kaltgut kann aber bevorzugt auch Kohlenwasserstoffe bzw. Kohlenstoffträger enthalten, sodass hier die ebenfalls starke endotherme heterogene und homogene Wassergasreaktion bzw. die Boudouard-Reaktion ausgenützt werden kann. Ein reduziertes Abgas (CO-hältig) kann ebenfalls durch Einsprühen von Wasser gekühlt werden, wobei hier die Wassergas-Shift-Reaktion wirksam wird (CO + H₂O -> CO₂ + H₂). Somit wird die fühlbare Wärme des Abgases in chemische Energie in Form von H₂ und CO umgewandelt. Dieser so gebildete Brennstoff kann dann außerhalb des erfindungsgemäßen Verfahrens als Brenngas verwendet werden und verbessert die Wirtschaftlichkeit des Verfahrens signifikant.

Bevorzugt erfolgt die Zugabe von Eisenoxid und Phosphoroxide sowie ggf. Chromoxid enthaltenden Stäuben in das Abgas auch unter Zusatz von Cl₂-Gas und ggf. O₂, sodass eine Art "Vorchlorierung" der Stäube erfolgt, bei der das in den zugegebenen Stäuben enthaltene FeO wieder einer Oxychlorierung unter Freisetzung von gasförmigen Eisenchloriden unterworfen wird. Dabei entsteht mit Rücksicht auf die Zugabe von Chlorgas unter Anwesenheit bzw. Zugabe von freiem O₂ vor allem FeCl₃, welches einen Siedepunkt von 319°C aufweist und gasförmig mit den gekühlten Abgasen der Brennkammer abgezogen werden kann. Dadurch kann die Wärme des Abgases in vorteilhafter Weise für die Vorchlorierung genutzt und die Energieeffizienz erhöht werden. Die festen Bestandteile des Abgases werden in der Trenneinrichtung abgetrennt und der Mischkammer rückgeführt. Um eine Anreicherung der Schmelze mit Cu-, Zn-, Cd-, Alkali- bzw. Hg-Chloriden zu vermeiden, wird bevorzugt eine Teilmenge von insbesondere 5-15 Gew.-% der abgetrennten festen Partikel vor der Aufgabe in die Mischkammer abgezogen und somit von der Rückführung in die Mischkammer ausgenommen.

Die nach der Trenneinrichtung verbleibenden Gase können einer fraktionierten Kondensation bzw. Kühlung unterworfen werden, um FeCl₃ (Siedepunkt 319°C) und FeCl₂ (Siedepunkt 1.026°C) getrennt voneinander zu erhalten.

Im Falle der Aufarbeitung von Tiermehl enthält das den Gasraum des Schmelzebehälters verlassende Abgas vorwiegend CO, H₂, CO₂ und N₂. Das Abgas kann in einem nachgeschaltenen Gaskonverter durch Eindüsen von Wasser, z.B. von mit organischen Schadstoffen belastetem Wasser, insbesondere prionenhältigem Abwasser aus der Tierkörperverwertung, gekühlt werden. Im Falle der Verwendung von belastetem Abwasser wird dadurch eine thermische Zerstörung von organischen Schadstoffen, wie z.B. Prionen BSE-verseuchter Tiere, gewährleistet. In einer ersten Abkühlphase wird hierbei die Verdampfungsenthalpie des eingedüsten Wassers zur Abkühlung des Abgases genutzt. In einer zweiten Abkühlphase ab ca. 700 °C wird die Wassergas-Shift-Reaktion genutzt, um die fühlbare Wärme des Abgases in chemische Energie umzuwandeln.

Die verbleibende fühlbare Wärme des Abgases kann nachfolgend in einem Abhitzekessel genutzt werden.

Das abgekühlte Abgas kann abschließend entstickt werden, wobei dies in vorteilhafter Weise durch Zugabe einer geringen Menge an Tiermehl erfolgen kann. Durch Einbringen von Tiermehl in das Rauchgas wird aufgrund des organischen Anteils des Tiermehls, welches eine Vielzahl an Aminen aus diversen Proteinen enthält, der NOx-Gehalt des Rauchgases auf unter 400 ppm NOx reduziert. Dabei entsteht elementarer Stickstoff und H₂O, neben kurzkettigen Kohlenwasserstoffen, z.B.: NO + NO₂ + NH₃ (aus Tiermehl) -> 2 N₂ + 3 H₂O.

Was die Anordnung der Düsen für die Zufuhr von Sekundärsauerstoff in die Brennkammer betrifft, sieht eine bevorzugte Ausführung vor, dass die Düsen entlang eines koaxial zur Brennerlanze angeordneten Rings und bevorzugt am Eintritt des Brennstoffstrahles in die Brennkammer angeordnet sind. Hinsichtlich der Gestaltung der Ringdüse ist es bevorzugt, wenn die Ausrichtung der Düsenachsen der einzelnen Düsen alternierend senkrecht, d.h. parallel zum Brennstoffstrahl, und nach innen zum Brennstoffstrahl geneigt angeordnet sind. Auf eine Düse mit senkrechter Düsenachse folgt somit eine Düse mit geneigter Düsenachse, auf diese wieder eine Düse mit senkrechter Düsenachse usw. Die alternierenden Sekundärdüsenachsen haben eine positive Wirkung in Bezug auf die Staub- und Wärmeverteilung in der Brennkammer. Insbesondere kann so die problematische Staubversinterung an der Brennermündung ("Bartbildung") durch Rückströmeffekte an die Brennermündung stark vermindert bzw. verhindert werden. Durch diese Sekundärdüsenanordnung kann eine gleichmäßige Staubbelastung des Brennkammerquerschnittes erreicht werden bzw. es können gezielte Rückströmverhältnisse in der Brennkammer eingestellt werden. Diese Rückströmverhältnisse werden besonders dann sehr wichtig, wenn man die sich aus dem Staub bildenden Tröpfchen gezielt zu größeren Tröpfcheneinheiten agglomerieren möchte bzw. Gas-/Schmelze -Reaktionen in der Brennkammer durchführen möchte, was zu einer entsprechenden notwendigen Erhöhung der mittleren Tröpfchenverweilzeit in der Brennkammer führt. Die Partikel können dabei aufgeschmolzen werden, um im anschließenden Schmelzesumpf verschlackt zu werden.

Die Erfindung wird nachfolgend anhand von in der Zeichnung schematisch dargestellten Ausführungsbeispielen näher erläutert. In dieser zeigen Fig. 1 eine erfindungsgemäße Vorrichtung, Fig. 2 eine Schnittansicht der Mischkammer samt Expansionskammer und Brenner, Fig. 3 und 4 eine Detailsicht einer Ringdüse zur Verwendung in der Brennkammer und Fig. 5 eine Detailsicht einer bevorzugten Ausbildung des Schmelzebehälters mit Abstichöffnung.

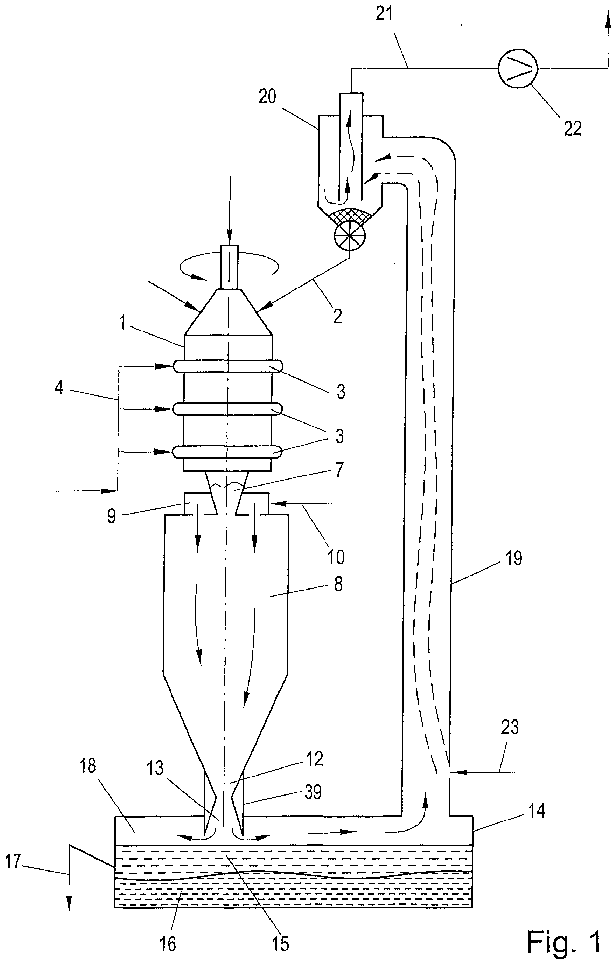

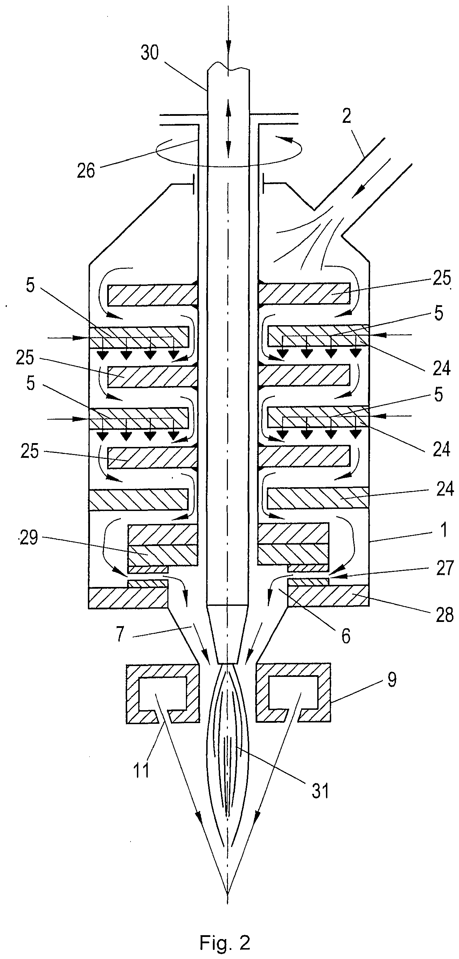

Fig. 1 zeigt eine Mischkammer 1, in welche über eine schematisch angedeutete Leitung 2 Stäube eingebracht werden können. Die Mischkammer 1 weist ein zylindrisches Gehäuse auf, an welchem eine Mehrzahl von ringförmigen Kanälen 3 angeordnet sind, welchen Sauerstoff über Leitungen 4 zugeführt werden kann und welche mit im Inneren der Mischkammer 1 mündenden Düsen 5 (Fig.2) für Primärsauerstoff in Verbindung stehen. An die Austragsöffnung 6 (Fig. 2) der Mischkammer 1 schließt eine Expansionskammer 7 an, welche wiederum in die Brennkammer 8 mündet. An der Mündung der Expansionskammer 7 in die Brennkammer 8 wird eine Brennermündung ausgebildet, über welche ein Brennstoff-, insbesondere Brenngasstrahl gemeinsam mit einem Staub-Primärsauerstoff-Gemisch in die Brennkammer 8 ausgestoßen wird. Die Mischkammer 1, die Expansionskammer 7 und die Brennkammer 8 sind koaxial angeordnet. Eine Ringdüse 9 ist koaxial zur Brennermündung am Eintritt des Brennstoffstrahles in die Brennkammer 8 angeordnet und mit einer schematisch angedeuteten Leitung 10 zur Zufuhr von Sekundärsauerstoff verbunden. Die Ringdüse 9 umfasst eine Mehrzahl von entlang eines koaxial zur Brennermündung verlaufenden Rings angeordneten Düsen 11 (Fig. 2).

Die Brennkammer 8 weist weiters am Übergang in den Schmelzebehälter 14 eine Venturidüse 12 und einen Diffusor 13 auf, über welche die in der Brennkammer 8 ausgebildeten Schmelzetröpfchen und Schmelztröpfchenagglomerate in den Schmelzebehälter 14 eingetragen und dort als Schmelzebad 15 gesammelt werden. Das Schmelzebad 15 liegt auf einer Sn/Cu/Ni-Legierungsschmelze 16. Der Abstich des Schmelzebads 15 erfolgt über einen gasdichten Abstich-Syphon 17. Der Abzug der aus der Brennkammer 8 stammenden Abgase erfolgt über den Gasraum 18 des Schmelzebehälters 14 und den an diesen angeschlossenen Abzug 19. Der Abzug 19 führt in eine Trenneinrichtung 20 zum Abtrennen von festen Partikeln aus dem Abgasstrom. Die abgetrennten festen Partikel können über die Leitung 2 wiederum der Mischkammer 1 rückgeführt werden. Die gasförmigen Anteile werden über die Leitung 21 ggf. einer weiteren Verwertung zugeführt. Das Saugzuggebläse 22 sorgt für den erforderlichen Unterdruck.

In den Abzug 19 mündet im unteren Bereich eine Leitung 23, über welche der Kühlung des Abgases dienende Stoffe eingebracht werden können. Über diese Leitung 23 erfolgt z.B. die Kaltgutaufgabe, d.h. die Zugabe von Eisenoxid und Phosphoroxide sowie ggf. Chromoxid enthaltenden Stäuben, welche nach dem Durchlaufen des Abzugs 18 über die Trennvorrichtung 20 abgetrennt und über die Leitung 2 rückgeführt werden. Über die Leitung 23 kann alternativ aber auch Wasser eingedüst werden, mit welchem das Eisenchloride enthaltende Abgas der Brennkammer gekühlt und einer Pyrohydrolyse unterworfen wird, wobei die Eisenchloride zu Magnetit (Fe₃O₄) und/oder Hämatit (Fe₂O₃) und HCl umgesetzt werden, wobei Magnetit bzw. Hämatit über die Trenneinrichtung 20 ausgeschleust werden kann. In diesem Fall ist die Feststoffaustragsöffnung der Trenneinrichtung 20 nicht mit der Leitung 2 verbunden.

In der Detailansicht gemäß Fig. 2 sind die Mischkammer 1, die Expansionskammer 7 sowie die Brennermündung gezeigt. Es ist ersichtlich, dass im Inneren der Mischkammer 1 in Achsrichtung alternierend statische Mischelemente 24 und rotierende Mischelemente 25 angeordnet sind. Die Mischelemente 24, 25 sind von Stäben gebildet, wobei die statischen Stäbe 24 am Gehäuse angebracht sind und radial nach innen ragen und die rotierenden Stäbe 25 an einem rotierenden axialen Rohr 26 befestigt sind. Auf jeder Ebene ist eine Mehrzahl von in Umfangsrichtung verteilten statischen Stäben 24 bzw. rotierenden Stäben 25 vorgesehen. An oder in den statischen Stäbe 24 sind die Düsen 5 angeordnet. Das rotierend gelagerte Rohr 26 ist mit einem nicht dargestellten Rotationsantrieb gekoppelt.

Weiters ist in der Mischkammer 1 ein Drosselspalt 27 vorgesehen, der zwischen einem stehenden Ring 28 und einem rotierenden Ring 29 ausgebildet ist, der ebenfalls an dem rotierenden Rohr 26 befestigt ist. Der Drosselspalt 27 ist koaxial zur Achse der Mischkammer 1 bzw. zur deren Austragsöffnung 6 angeordnet. Im Inneren des rotierenden Rohrs 26 ist eine Brennstofflanze 30 höhenverstellbar angeordnet, wobei die Ausstoßdüse der Brennstofflanze 30 unterhalb des Drosselspalts 27 in der Expansionskammer 7 mündet und einen schematisch angedeuteten Brennstoffstrahl 31 ausstößt.

Die Ringdüse 9 ist an der Mündung der Expansionskammer in die Brennkammer 8, d.h. an der Brennermündung angeordnet und umgibt diese ringförmig. Die Düsenöffnungen der Ringdüse 9 sind mit 11 bezeichnet und sind alternierend achsparallel und nach innen bzw. außen geneigt.

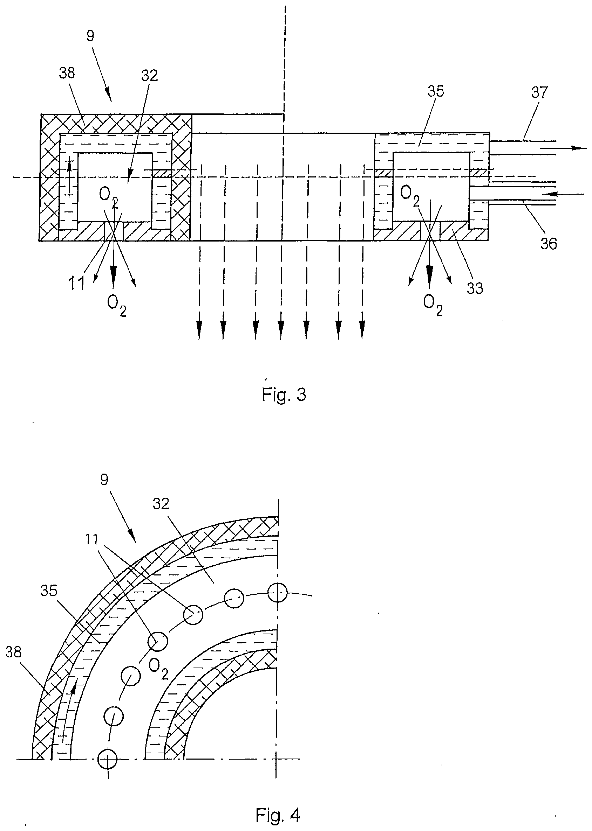

In Fig. 3 (vertikaler Querschnitt) und 4 (horizontaler Querschnitt) ist die Ringdüse 9 vergrößert dargestellt. Es ist ersichtlich, dass die Ringdüse 9 eine ringförmige Düsenkammer 32 aufweist, welche eine kreisförmige Reihe von in einer Düsenplatte 33 ausgebildeten Lochdüsen 11 aufweist. Die ringförmige Düsenkammer 32 ist von einem im Querschnitt U-förmigen Kühlwasserkanal 35 umgeben, welcher einen Kühlwasserzulauf 36 und einen Kühlwasserablauf 37 umfasst. Weiters kann die Ringdüse eine Feuerfestummantelung 38 tragen.

Die Ringdüse 9 kann bevorzugt auch derart ausgestaltet sein, dass der austretende Sekundärsauerstoff eine Verdrallung erfährt. Die Düsenöffnungen 11 können hierbei jeweils eine geneigte Achse bzw. Austrittsrichtung aufweisen, welche eine tangentiale bzw. umfangsmäßige Richtungskomponente aufweist. Es hat sich herausgestellt, dass die zusätzliche Verdrallung der Sauerstoff-Strömungsstrahlen zu einer optimalen Wirbelströmung und damit zu einer weiteren Erhöhung der Reaktionsgeschwindigkeit und zu einer Vergleichmäßigung des Reaktionsfortschrittes bzw. der Reaktionsfront in der Brennkammer 8 führt. Die Schrägstellung der Düsenöffnungen 11 aus der Bildebene (Fig.3) kann z.B. einen Winkel von 3° bis 15° zur Brennkammerachse umfassen.

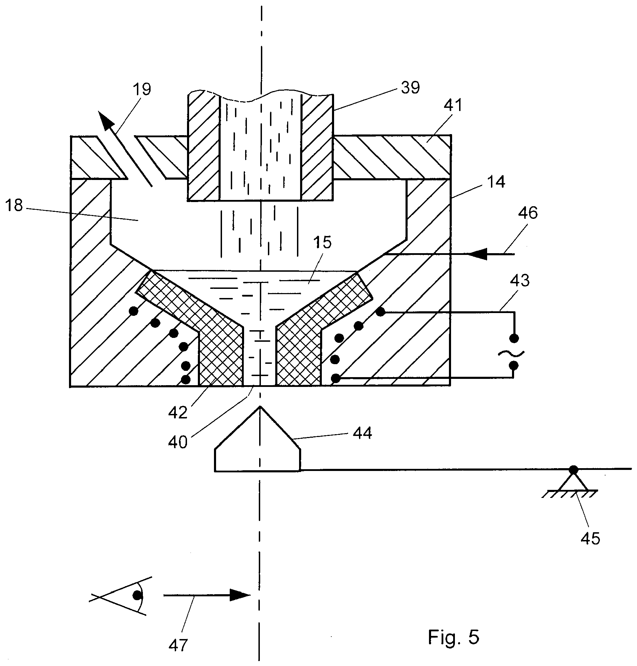

Fig. 5 zeigt eine Detailsicht einer bevorzugten Ausbildung des Schmelzebehälters 14 mit einer zentralen Abstichöffnung 40 zum Ablassen der sich im Schmelzebehälter 14 ansammelnden flüssigen Schmelze 15. Der Eintrag der Schmelzetröpfchen aus der Brennkammer 8 erfolgt über das Rohr 39, welches einen Deckel 41 des Schmelzebehälters 14 durchsetzt und vertikal in den Gasraum 18 des Schmelzebehälters 14 mündet. Das Rohr 39 verringert den Tröpfchenaustrag in das Abgas (Abzug 19) signifikant, weil ein Großteil der aus der Brennkammer 8 kommenden Tröpfchen an der Rohrwandung zu einem kompakten Schmelzefilm agglomeriert. Der sich bildende Schmelzeschleier agglomeriert die Resttröpfchen.

Der Abstichbereich wird induktiv über den Graphitblock 42 beheizt, wobei die Induktorschleifen 43 wassergekühlt sein können. Wird Strom der Induktionsheizung abgeschaltet, wird das System durch das Kühlwasser kalt und die Schmelze friert ein. Man erhält dadurch ein elektrodynamisches Sperrorgan , welches es erlaubt, die Abstichöffnung 40 wahlweise zu öffnen oder zu verschließen.

Der angedeutete Stöpsel 44, welcher ebenfalls aus Graphit bestehen kann, kann mit Hilfe des Schwenklagers 45 ein- und aus geschwenkt werden und dient somit dem An- und Abfahren.

Alternativ kann der Abstichbereich auch konduktiv beheizt werden, z.B. mit Hilfe einer elektrischen Widerstandsheizung.

Die zentrale Anordnung der Abstichöffnung 40 im Boden des Schmelzebehälters 14 weist im Vergleich zu einem seitlichen Abstich große Vorteile in Bezug auf die Regelbarkeit, die Sicherheit (nur geringes Schmelze-Sumpf-Volumen) und den Wärmeverlust auf, wobei das Gesamtapparatevolumen hier deutlich geringer ist als bei einem Seitenabstich.

Die Bestimmung des Schmelzeniveaus kann in einfacher Weise über den Druckverlust eines Spülgases 46 bestimmt werden wobei als Spülgas z.B. ein Inertgas (N₂) verwendet werden kann.

Der aus der Abstichöffnung 40 kommende Schmelzefluss kann optisch mittels eines Schlackentelemeters (FIC) 47 sehr einfach bestimmt werden, wobei die Messwerte herangezogen werden, um das System zu regeln.

Als Feuerfestmaterial für die Auskleidung der Brennkammer 8 kann in vorteilhafter Weise hochtoniger Spinell verwendet werden, da sich hierbei auf Grund der phosphoroxidischen Atmosphäre an dem genannten Material eine Schutzschicht aus Al₂O₃.P₂O₅, z.B. AlPO₄ ausbildet. Insbesondere wird durch die Phosphatierung des hochtonigen Feuerfestmateriales das hochfeuerfeste Mineral Berlinit als Schutzschicht gebildet.

## Patentansprüche

1. Verfahren zur Aufarbeitung von Phosphoroxide enthaltenden Stäuben, bei welchem die Stäube sowie Primärsauerstoff in eine Mischkammer (1) eingebracht werden, die Stäube durch die Wirkung von Scherkräften desagglomeriert und mit dem Primärsauerstoff vermischt werden, um ein Staub-Sauerstoff-Gemisch zu erhalten, das Staub-Sauerstoff-Gemisch über einen ringförmigen Drosselspalt (27) aus der Mischkammer (1) in eine einen gegenüber der Mischkammer (1) verringerten Druck aufweisende Expansionskammer (7) ausgebracht wird, aus welcher das Staub-Sauerstoff-Gemisch in eine Brennkammer (8) ausgestoßen wird, in welcher das Gemisch unter Zufuhr von Sekundärsauerstoff zu Schmelzetröpfchen aufgeschmolzen wird, wobei die Schmelzetröpfchen agglomeriert und die Schmelze in einem Schmelzebehälter gesammelt wird.

2. Verfahren nach Anspruch 1, **dadurch gekennzeichnet, dass** die Stäube Eisenoxid enthalten und dass das Staub-Sauerstoff-Gemisch in der Brennkammer (8) unter ergänzender Anwesenheit von elementarem Chlor und ggf. Chloridträgern zu Schmelzetröpfchen aufgeschmolzen wird, wobei die entstehenden Eisenchloride gasförmig abgezogen und die von Eisenoxiden und ggf. Chromoxiden weitestgehend befreiten Schmelzetröpfchen agglomeriert werden.

3. Verfahren nach Anspruch 2, **dadurch gekennzeichnet, dass** das Staub-Sauerstoff-Gemisch durch den Impuls eines Brennstoffstrahles, insbesondere Brenngasstrahles gemeinsam mit diesem in die Brennkammer (8) ausgestoßen wird.

4. Verfahren nach Anspruch 1, 2 oder 3, **dadurch gekennzeichnet, dass** die Schmelze einer Reduktion zur Gewinnung von elementarem Phosphor unterzogen wird.

5. Verfahren nach Anspruch 2, 3 oder 4, **dadurch gekennzeichnet, dass** das Chlorid als HCl mit den Stäuben in die Mischkammer (1) eingebracht oder als gasförmiges HCl gesondert von den Stäuben in die Mischkammer (1) eingebracht wird, wobei bevorzugt Cl₂-Gas in die Mischkammer (1) und/oder in die Brennkammer (8) eingebracht wird.

6. Verfahren nach einem der Ansprüche 2 bis 5, **dadurch gekennzeichnet, dass** als Chloridträger CaCl₂ in die Mischkammer (1) und/oder in die Brennkammer (8) und/oder in den Schmelzebehälter (14) eingebracht wird oder vorgemischt mit den aufzuarbeitenden Stäuben eingebracht wird.

7. Verfahren nach einem der Ansprüche 3 bis 6, **dadurch gekennzeichnet, dass** die Zufuhr von Sekundärsauerstoff über eine koaxial zum Brennstoffstrahl angeordnete, ringförmige Düse (9) erfolgt und bevorzugt die Zugabe von Cl₂-Gas über die ringförmige Düse (9), insbesondere als Cl₂/O₂-Gemisch, erfolgt.

8. Verfahren nach einem der Ansprüche 1 bis 7, **dadurch gekennzeichnet, dass** die Brennkammer (8) unter einem unter dem Druck der Expansionskammer (7) liegenden Druck gehalten wird.

9. Verfahren nach einem der Ansprüche 2 bis 8, **dadurch gekennzeichnet, dass** das die Eisenchloride enthaltende Abgas der Brennkammer (8) unter Zugabe von Wasser reaktiv gekühlt und einer Pyrohydrolyse unterworfen wird, wobei die Eisenchloride zu Magnetit (Fe₃O₄) und/oder Hämatit (Fe₂O₃) und HCl umgesetzt werden.

10. Verfahren nach einem der Ansprüche 1 bis 9, **dadurch gekennzeichnet, dass** als Brenngas wasserfreies CO eingesetzt wird.

11. Verfahren nach einem der Ansprüche 2 bis 10, **dadurch gekennzeichnet, dass** das die Eisenchloride und ggf. Schmelzetröpfchen enthaltende Abgas unter Zugabe von Eisenoxid und Phosphoroxide sowie ggf. Chromoxid enthaltenden Stäuben gekühlt wird und die gekühlten Stäube ggf. gemeinsam mit den erstarrten Schmelzetröpfchen in die Mischkammer (1) eingebracht werden.

12. Verfahren nach einem der Ansprüche 1 bis 11, **dadurch gekennzeichnet, dass** die Scherkräfte in der Mischkammer (1) durch rotierende, insbesondere stangenförmige Mischelemente (24, 25) aufgebracht werden, wobei bevorzugt in Strömungsrichtung der Stäube abwechselnd rotierende Mischelemente (25) und statische Mischelemente (24) angeordnet sind, wobei die statischen Mischelemente (24) vorzugsweise Düsen (5) zum Ausstoßen des Primärsauerstoffs aufweisen.

13. Verfahren nach einem der Ansprüche 1 bis 12, **dadurch gekennzeichnet, dass** der ringförmige Drosselspalt (27) von zwei Ringflächen begrenzt wird, die eine Relativdrehgeschwindigkeit zueinander aufweisen.

14. Verfahren nach Anspruch 1, 5, 8, 12 oder 13, **dadurch gekennzeichnet, dass** Tiermehl enthaltende Stäube in die Mischkammer (1) eingebracht werden, wobei der Tiermehlanteil der Stäube vorzugsweise > 60 Gew.-% beträgt, wobei bevorzugt die Tiermehl enthaltenden Stäube gemeinsam mit einem Silikatträger, wie z.B. Klärschlammasche, in die Mischkammer eingebracht werden und bevorzugt die Stäube Tiermehl in einem Anteil von 80 bis 96 Gew.-% und Klärschlammasche in einem Anteil von 4 bis 20 Gew.-% enthalten.

15. Vorrichtung zur Durchführung eines Verfahrens nach einem der Ansprüche 1 bis 14, umfassend eine Mischkammer (1) mit einer Aufgabeöffnung für die Aufgabe von Stäuben und mit einer Austragsöffnung (6), wobei in der Mischkammer (1) von einem Rotationsantrieb rotierend antreibbare stangenförmige Mischelemente (24, 25) angeordnet sind, in die Mischkammer (1) mündende Düsen (5) zum Einbringen von Primärsauerstoff vorgesehen sind und die Austragsöffnung von einem ringförmigen Drosselspalt (27) gebildet ist, weiters umfassend eine Expansionskammer (7), welche an den Drosselspalt (27) anschließend angeordnet ist, und eine Brennkammer (8), welche an die Expansionskammer (7) anschließend angeordnet ist, wobei in die Brennkammer (8) Düsen (11) für die Zufuhr von Sekundärsauerstoff münden, und weiters umfassend einen an eine Austragsöffnung der Brennkammer (8) anschließenden Schmelzebehälter (14) zum Sammeln der in der Brennkammer (8) entstehenden Schmelzetröpfchen sowie einen Abzug (19) zum Abziehen der Abgase.

16. Vorrichtung nach Anspruch 15, **dadurch gekennzeichnet, dass** eine koaxial zum ringförmigen Drosselspalt (27) angeordnete, in die Expansionskammer (7) oder stromabwärts der Expansionskammer (7) mündende Brennerlanze zum Einbringen eines Brennstoff-, insbesondere Brenngasstrahles vorgesehen ist, sodass ein Staub-Sauerstoff-Gemisch durch den Impuls des Brennstoffstrahles gemeinsam mit diesem aus der Expansionskammer (7) in die Brennkammer ausgestoßen werden kann, wobei bevorzugt in Strömungsrichtung der Stäube in der Mischkammer (8) abwechselnd rotierende Mischelemente (25) und statische Mischelemente (24) angeordnet sind, wobei die statischen Mischelemente (24) vorzugsweise die Düsen (5) zum Ausstoßen des Sekundärsauerstoffs aufweisen.

17. Vorrichtung nach Anspruch 15 oder 16, **dadurch gekennzeichnet, dass** die Düsen (11) für die Zufuhr von Sekundärsauerstoff ggf. gemeinsam mit Chlorgas, entlang eines koaxial zur Brennerlanze angeordneten Rings und bevorzugt am Eintritt des Brennstoffstrahles in die Brennkammer (8) angeordnet sind und bevorzugt der ringförmige Drosselspalt (27) von zwei Ringflächen begrenzt wird, wobei wenigstens eine Ringfläche zu Rotation antreibbar ist.

18. Vorrichtung nach einem der Ansprüche 15 bis 17, **dadurch gekennzeichnet, dass** in den Abzug (19) eine Leitung zum Einbringen von Eisenoxid und Phosphoroxide sowie ggf. Chromoxid enthaltenden Stäuben oder von Wasser mündet, wobei bevorzugt der Abzug (19) mit einem Saugzuggebläse versehen ist und bevorzugt der Abzug eine Trenneinrichtung zum Abtrennen von festen Partikeln aus dem Abgasstrom aufweist.

## Claims

1. Method of processing dusts containing phosphorus oxides, in which the dusts and primary oxygen are introduced into a mixing chamber (1), the dusts are deagglomerated by the action of shear forces and mixed with the primary oxygen in order to obtain a dust-oxygen mixture, the dust-oxygen mixture is discharged via an annular restrictor gap (27) from the mixing chamber (1) into an expansion chamber (7) which has a pressure lower than that of the mixing chamber (1) and from which the dust-oxygen mixture is ejected into a combustion chamber (8), in which the mixture is melted to obtain melt droplets under the addition of secondary oxygen, the melt droplets agglomerating and the melt being collected in a melt container.

2. Method according to claim 1, **characterized in that** the dusts contain iron oxide and that the dust-oxygen mixture in the combustion chamber (8) is melted into melt droplets under the supplementary presence of elemental chlorine and optionally chloride carriers, wherein the obtained iron chlorides are drawn off in gaseous form and the melt droplets largely freed from iron oxides and optionally chromium oxides are agglomerated.

3. Method according to claim 2, **characterized in that** the dust-oxygen mixture is ejected into the combustion chamber (8) by the impuls of and together with a fuel jet, in particular a fuel gas jet.

4. Method according to claim 1, 2 or 3, **characterized in that** the melt is subjected to a reduction to obtain elemental phosphorus.

5. Method according to claim 2, 3 or 4, **characterized in that** the chloride is introduced into the mixing chamber (1) as HCl with the dusts or is introduced into the mixing chamber (1) as gaseous HCl separately from the dusts, wherein Cl₂ gas is preferably introduced into the mixing chamber (1) and/or into the combustion chamber (8).

6. Method according to any one of claims 2 to 5, **characterized in that** CaCl₂ is introduced as the chloride carrier into the mixing chamber (1) and/or into the combustion chamber (8) and/or into the melt container (14) or is introduced premixed with the dusts to be processed.

7. Method according to any one of claims 3 to 6, **characterized in that** the supply of secondary oxygen takes place via an annular nozzle (9) arranged coaxially to the fuel jet and wherein the addition of Cl₂ gas preferably takes place via the annular nozzle (9), in particular as Cl₂/O₂ mixture.

8. Method according to any one of claims 1 to 7, **characterized in that** the combustion chamber (8) is kept under a pressure which is below the pressure of the expansion chamber (7).

9. Method according to any one of claims 2 to 8, **characterized in that** the exhaust gas from the combustion chamber (8) containing the iron chlorides is reactively cooled with the addition of water and subjected to pyrohydrolysis, the iron chlorides being converted to magnetite (Fe₃O₄) and/or hematite (Fe₂O₃) and HCl.

10. Method according to any one of claims 1 to 9, **characterized in that** anhydrous CO is used as the fuel gas.

11. Method according to any one of claims 2 to 10, **characterized in that** the exhaust gas containing the iron chlorides and, if applicable, melt droplets is cooled with the addition of dusts containing iron oxide and phosphorus oxides and, if applicable, chromium oxide, and wherein the cooled dusts, optionally together with the solidified melt droplets, are introduced into the mixing chamber (1).

12. Method according to any one of claims 1 to 11, **characterized in that** the shear forces in the mixing chamber (1) are applied by rotating, in particular rod-shaped mixing elements (24, 25), wherein preferably rotating mixing elements (25) and static mixing elements are alternately arranged in the flow direction of the dust (24), the static mixing elements (24) preferably having nozzles (5) for ejecting the primary oxygen.

13. Method according to any one of claims 1 to 12, **characterized in that** the annular restrictor gap (27) is delimited by two annular surfaces which have a relative rotational speed to one another.

14. Method according to claim 1, 5, 8, 12 or 13, **characterized in that** dusts containing animal meal are introduced into the mixing chamber (1), wherein the animal meal content of the dusts is preferably > 60% by weight, whereby the dusts containing animal meal are preferably introduced into the mixing chamber together with a silicate carrier, such as sewage sludge ash, and wherein preferably the dusts contain animal meal in a proportion of 80 to 96% by weight and sewage sludge ash in a proportion of 4 to 20% by weight.

15. Device for carrying out a method according to any one of claims 1 to 14, comprising a mixing chamber (1) with a feed opening for the feed of dusts and with a discharge opening (6), wherein rod-shaped mixing elements (24, 25) are arranged in the mixing chamber (1) that are rotatably driveable by a rotation drive, wherein nozzles (5) opening into the mixing chamber (1) are provided for introducing primary oxygen and the discharge opening is formed by an annular restrictor gap (27), further comprising an expansion chamber (7) which is arranged in a manner to follow the restrictor gap (27), and a combustion chamber (8) which is arranged in a manner to follow the expansion chamber (7), wherein nozzles (11) for the supply of secondary oxygen open into the combustion chamber (8), and further comprising a melt container (14) following a discharge opening of the combustion chamber (8) for collecting the melt droplets arising in the combustion chamber (8) as well as an extractor (19) for extraction in the exhaust gases.

16. Device according to claim 15, **characterized in that** a burner lance, which is arranged coaxially to the annular restrictor gap (27) and opens into the expansion chamber (7) or downstream of the expansion chamber (7), is provided for introducing a fuel jet, in particular fuel gas jet, so that a dust-oxygen mixture can be ejected from the expansion chamber (7) into the combustion chamber by the impulse of and together with the fuel jet, wherein preferably rotating mixing elements (25) and static mixing elements (24) are alternately arranged in the mixing chamber (8) in the direction of flow of the dust, wherein the static mixing elements (24) preferably have the nozzles (5) for ejecting the secondary oxygen.

17. Device according to claim 15 or 16, **characterized in that** the nozzles (11) for the supply of secondary oxygen, possibly together with chlorine gas, are arranged along a ring arranged coaxially to the burner lance and preferably at the entrance of the fuel jet into the combustion chamber (8) and wherein preferably the annular restrictor gap (27) is delimited by two annular surfaces, at least one annular surface being drivable to rotate.

18. Device according to any one of claims 15 to 17, **characterized in that** a line for introducing iron oxide and phosphorus oxides and possibly chromium oxide-containing dusts or water opens into the extractor (19), the extractor (19) preferably being provided with an induced draft fan and preferably the extractor has a separating device for separating solid particles from the exhaust gas flow.

## Revendications

1. Procédé de traitement de poussières contenant des oxydes de phosphore, dans lequel les poussières ainsi que de l'oxygène primaire sont introduites dans une chambre de mélange (1), les poussières sont désagglomérées par l'action de forces de cisaillement et mélangées à l'oxygène primaire, pour obtenir un mélange d'oxygène et de poussières, le mélange d'oxygène et de poussières est évacué, par un espace d'étranglement annulaire (27), de la chambre de mélange (1) dans une chambre de détente (7) dont la pression est réduite par rapport à la chambre de mélange (1), et depuis laquelle le mélange d'oxygène et de poussières est éjecté dans une chambre de combustion (8), dans laquelle le mélange est fondu en gouttelettes fondues avec ajout d'oxygène secondaire, dans lequel les gouttelettes fondues s'agglomèrent et la matière fondue est recueillie dans un récipient de matière fondue.

2. Procédé selon la revendication 1, **caractérisé en ce que** les poussières contiennent de l'oxyde de fer et **en ce que** le mélange d'oxygène et de poussières est fondu en gouttelettes fondues dans la chambre de combustion (8) en présence supplémentaire de chlore élémentaire et éventuellement de supports de chlorure, dans lequel les chlorures de fer résultants sont soutirés sous forme gazeuse et les gouttelettes fondues qui ont été en grande partie débarrassées d'oxydes de fer et, le cas échéant, d'oxydes de chrome s'agglomèrent.

3. Procédé selon la revendication 2, **caractérisé en ce que** le mélange d'oxygène et de poussières est éjecté dans la chambre de combustion (8) avec un jet de carburant, en particulier un jet de gaz combustible, par l'impulsion de celui-ci.

4. Procédé selon la revendication 1, 2 ou 3, **caractérisé en ce que** la matière fondue est soumise à une réduction pour récupérer le phosphore élémentaire.

5. Procédé selon la revendication 2, 3 ou 4, **caractérisé en ce que** le chlorure est introduit dans la chambre de mélange (1) avec les poussières sous forme de HCl, ou est introduit dans la chambre de mélange (1) sous forme de HCl gazeux séparément des poussières, dans lequel de préférence du gaz Cl₂ est introduit dans la chambre de mélange (1) et/ou dans la chambre de combustion (8).

6. Procédé selon l'une quelconque des revendications 2 à 5, **caractérisé en ce que** le CaCl₂ est introduit en tant que support de chlorure dans la chambre de mélange (1) et/ou dans la chambre de combustion (8) et/ou dans le récipient de matière fondue (14), ou prémélangé avec les poussières à traiter.

7. Procédé selon l'une quelconque des revendications 3 à 6, **caractérisé en ce que** l'apport d'oxygène secondaire s'effectue par une buse annulaire (9) disposée coaxialement au jet de carburant, et de préférence l'apport du gaz Cl₂ s'effectue par la buse annulaire (9), en particulier comme mélange Cl₂/O₂.

8. Procédé selon l'une quelconque des revendications 1 à 7, **caractérisé en ce que** la chambre de combustion (8) est maintenu sous une pression inférieure à la pression de la chambre de détente (7).

9. Procédé selon l'une quelconque des revendications 2 à 8, **caractérisé en ce que** le gaz d'échappement contenant les chlorures de fer de la chambre de combustion (8) est refroidi par réaction en ajoutant de l'eau et est soumis à une pyrohydrolyse, dans lequel les chlorures de fer sont convertis en magnétite (Fe₃O₄) et/ou en hématite (Fe₂O₃) et en HCI.

10. Procédé selon l'une quelconque des revendications 1 à 9, **caractérisé en ce que** le CO anhydre est utilisé comme gaz combustible.

11. Procédé selon l'une quelconque des revendications 2 à 10, **caractérisé en ce que** le gaz d'échappement contenant les chlorures de fer et, le cas échéant, les gouttelettes fondues est refroidi en ajoutant des poussières contenant de l'oxyde de fer et de l'oxyde de phosphore et, le cas échéant, de l'oxyde de chrome, et les poussières refroidis sont introduites, le cas échéant avec les gouttelettes fondues solidifiées, dans la chambre de mélange (1).

12. Procédé selon l'une quelconque des revendications 1 à 11, **caractérisé en ce que** les forces de cisaillement dans la chambre de mélange (1) sont appliquées par des éléments de mélange tournants, en particulier en forme de tige (24, 25), dans lequel, de préférence, des éléments de mélange rotatifs (25) et des éléments de mélange statiques (24) sont disposés alternativement dans le sens d'écoulement des poussières, dans lequel les éléments de mélange statiques (24) comportent de préférence des buses (5) d'éjection de l'oxygène primaire.

13. Procédé selon l'une quelconque des revendications 1 à 12, **caractérisé en ce que** l'espace d'étranglement annulaire (27) est limité par deux surfaces annulaires, qui ont une vitesse de rotation relative l'une par rapport à l'autre.

14. Procédé selon la revendication 1, 5, 8, 12 ou 13, **caractérisé en ce que** des poussières contenant des farines animales sont introduites dans la chambre de mélange (1), dans lequel la teneur en farines animales des poussières est de préférence > 60% en poids, dans lequel les poussières contenant des farines animales sont de préférence introduites dans la chambre de mélange avec un support de silicate, tel que par exemple des cendres de boues d'épuration, et les poussières contiennent de préférence des farines animales dans une proportion de 80 à 96% en poids et des cendres de boues d'épuration dans une proportion de 4 à 20% en poids.

15. Dispositif pour la mise en œuvre d'un procédé selon l'une quelconque des revendications 1 à 14, comprenant une chambre de mélange (1) avec une ouverture d'alimentation pour l'alimentation des poussières et avec une ouverture de décharge (6), dans lequel des éléments de mélange en forme de tige (24, 25) pouvant être entraînés en rotation par un entraînement rotatif sont disposés dans la chambre de mélange (1), dans lequel des buses (5) débouchant dans la chambre de mélange (1) sont prévus pour l'introduction d'oxygène primaire, et l'ouverture de décharge est formé par un espace d'étranglement annulaire (27), comprenant en outre une chambre de détente (7), qui est disposé en connexion avec la fente d'étranglement (27), et une chambre de combustion (8), qui est disposé en connexion avec la chambre de détente (7), dans lequel des buses (11) pour l'apport d'oxygène secondaire débouchent dans la chambre de combustion (8), et comprenant en outre un récipient de matière fondue (14) disposé en connexion avec une ouverture de décharge de la chambre de combustion (8) pour recueillir des gouttelettes fondues se formant dans la chambre de combustion (8) ainsi qu'un évent (19) pour évacuer les gaz d'échappement.

16. Dispositif selon la revendication 15, **caractérisé en ce que** une lance de brûleur disposée coaxialement à l'espace d'étranglement annulaire (27), et débouchant dans la chambre de détente (7) ou en aval de la chambre de détente (7), est prévue pour introduire un jet de carburant, en particulier un jet de gaz combustible, de sorte qu'un mélange d'oxygène et de poussières peut être éjecté de la chambre de détente (7) dans la chambre de combustion avec le jet de carburant, par l'impulsion de celui-ci, dans lequel, de préférence, des éléments de mélange rotatifs (25) et des éléments de mélange statiques (24) sont disposés alternativement dans le sens d'écoulement des poussières dans la chambre de mélange (8), dans lequel les éléments de mélange statiques (24) de préférence comportent les buses (5) d'éjection de l'oxygène secondaire.

17. Dispositif selon la revendication 15 ou 16, **caractérisé en ce que** les buses (11) pour l'apport d'oxygène secondaire, le cas échéant avec du chlore gazeux, sont disposées le long d'un anneau disposé coaxialement à la lance du brûleur et de préférence à l'entrée du jet de combustible dans la chambre de combustion (8), et de préférence l'espace d'étranglement annulaire (27) est limité par deux surfaces annulaires, dans lequel au moins une surface annulaire peut être entraînée en rotation.

18. Dispositif selon l'une quelconque des revendications 15 à 17, **caractérisé en ce qu'**une conduite pour l'introduction des poussières contenant de l'oxyde de fer et de l'oxyde de phosphore ainsi que, le cas échéant, l'oxyde de chrome ou de l'eau débouche dans l'évent (19), dans lequel, de préférence, l'évent (19) est pourvu d'un ventilateur de tirage induit et, de préférence, l'évent comporte un dispositif de séparation pour séparer les particules solides du flux de gaz d'échappement.
